# EUROPEAN PATENT SPECIFICATION

(11) **EP 3 200 586 B1**
(45) Date of publication and mention of the grant of the patent: **14.10.2020**
(21) Application number: 15842284.0
(22) Date of filing: 15.09.2015
(51) Int. Cl.: A01N 25/28, A01N 25/18, A01P 1/00, A01P 3/00, A61L 2/232, C09D 5/14, B01J 13/02

(54) **ANTIMICROBIAL COATING FOR LONG-TERM DISINFECTION OF SURFACES**
ANTIMIKROBIELLE BESCHICHTUNG FÜR LANGZEITDESINFEKTIONSVON OBERFLÄCHEN
REVÊTEMENT ANTIMICROBIEN POUR LA DÉSINFECTION DE SURFACES À LONG TERME

(30) Priority: 19.09.2014 US 201462071276 P
(43) Date of publication of application: 09.08.2017
(73) Proprietor: The Hong Kong University of Science and Technology, Kowloon Hong Kong (CN)
(72) Inventor: YEUNG, King Lun, Kowloon Hong Kong (CN); LAI, Yue Tak, Hong Kong (CN); HAN, Wei, Hong Kong (CN); LI, Ying, Kowloon Hong Kong (CN); LI, Yan, Kowloon Hong Kong (CN)
(74) Representative: AWA Sweden AB
(86) International application number: PCT/CN2015/089621
(87) International publication number: WO 2016/041488

(56) References cited:
- EP-A2- 1 834 524
- WO-A1-2009/062518
- WO-A1-2010/069152
- WO-A2-2013/087405
- WO-A2-2013/087405
- CN-A- 102 407 088
- US-A1- 2008 147 019
- US-A1- 2008 175 812
- US-A1- 2011 306 501
- US-A1- 2011 306 501

## Description

### RELATED APPLICATIONS

The present patent application claims priority to provisional U.S. Patent Application No. 62/071,276 filed September 19, 2014, which was filed by the inventor hereof and is incorporated by reference herein in its entirety.

### BACKGROUND

The present subject matter relates to materials possessing a combination of release-killing, contact-killing and anti-adhesion antimicrobial properties and details of their preparation, as well as physicochemical properties and methods of use for long-term disinfections of solid and porous surfaces.

According to a World Health Organization report(*www.who.int*/*mediacentre*/*factsheets*/*fs310*/*en*/), airborne and waterborne pathogens, such as tuberculosis, lower respiratory infections and pulmonaryinfections are among the top ten causes of deaths accounting for millions of death each year. Currently, filtration technology remains the most effective and economical means for air and water purification and disinfection. However a known problem with conventional filtration technology is the fact microbes trapped in filters remain viable to the extent they can grow in and colonize the filter. For example, in an air filter the warm and humid environment encourages microbial growth and presents a two-fold problem. Not only is filter performance degraded, but the colonization also poses a clear risk of contamination of the air to be filtered by the very pathogenic bacteria, viruses and fungi that the filter is designed to eliminate. A further known problem of conventional filtration technology is the ability of ultra-small cells and viruses to penetrate the filter.

Certain solutions attempt to address the problem of microbial colonization, contamination and fouling in air and water filters. Some examples in this regard are addition of a photocatalyst, as shown in U.S. Patent Nos. 6,607,702 and 6,878,277 and U.S. Published Application Nos. 2009/0209897 and 2011/0159109; addition of metal, such as silver nanoparticles, or a metal oxide, such as zinc oxide nanoparticles, as shown in U.S. Patent Nos. 5,618,762, 5,681,468 and 7,744,681 and U.S. Published Application Nos. 2005/0279211, 2007/0045176 and 2008/0302713); addition of other biocides in the filtration media, such as biostat, organic quaternary ammonium salt, phenol derivatives and isothiazolin-based compounds, as respectively shown in U.S. Patent Nos. 5,288,298, 6,780,332, 5,762,797, 5,868,933, 6,171,496, and 7,942,957, and combining irradiation technologies with the filtration process, such as UV, magnetic or electric fields, plasma and polarization, as shown in U.S. Patent Nos. 6,939,397 and 6,776,824.

WO2009/062518 discloses an anti-fouling composition comprising one or more aerogels. WO2013/087405 discloses release capsules and methods of manufacture of such release capsules. US2011/306501 discloses microcapsules with a core/shell structure which comprise at least one low molecular weight, anionic surfactant and have a metal oxide-containing shell. US2008/175812 discloses compositions comprising a polymer base incorporating antifouling compositions. US2008/147019 discloses material composition, including metallic nanoparticles of silver, silver alloys, or copper, having antimicrobial properties. EP1834524 discloses blends of encapsulated biocides with free biocides.

These solutions present various drawbacks. For example, photocatalytic disinfection requires an additional light source, is slow, sensitive to humidity and vulnerable to surface contamination. The use of silver nanoparticles increases the material and manufacturing costs. Furthermore, widespread use and misuse of antimicrobial silver is responsible for the emergence of silver-tolerant and resistant bacteria. Though irradiation treatments are relatively safe and disinfect rapidly, the additional electrical devices and electricity result in higher device and disinfection costs. For these reasons, the manufacturability, safety and long-term stability of filters using ancillary technologies and those including natural and synthetic biocides remain a concern.

The present subject matter overcomes the shortcomings described. Filters prepared utilizing the instant specific colloidal encapsulation of biocide mixtures containing at least one volatile or semi-volatile biocide in an inorganic-organic shell capable of varying and controlling the release of the enclosed biocides provide measurable, unexpected benefits. The inorganic-organic shell comprises one or more polymers and one or more metal compounds, such as metal oxides, metal salts, metal complexes and/or metallic particles, possessing delayed killing, contact-killing and anti-adhesion properties. The antimicrobial coating solution can be coated on both porous and nonporous surfaces to create an antimicrobial surface exhibiting a combination of release-killing, contact-killing and anti-adhesion properties against microorganisms.

### BRIEF SUMMARY

The present subject matter, in one embodiment is directed to an antimicrobial coating material for surface coating comprising: (a) biocides comprising at least one antimicrobial component selected from the group consisting of chlorine dioxide, hydrogen peroxide, peroxy acids, alcoholic compounds, phenolic compounds, essential oils, antimicrobial components of essential oils, antimicrobial phytochemicals, and combinations thereof; and (b) inorganic-organic shells permeable to the biocides, comprising: inorganic materials selected from the group consisting of metal oxides, which are selected from the group of titania sol, silica sol, and alumina sol, metal complexes, which are titanium peroxo complex sol, and combinations thereof; and organic materials comprising a nonionic polymer, wherein the inorganic materials are present in a concentration of 0.5-95 wt% of the inorganic-organic shells, and wherein the inorganic-organic shells enclose and contain the biocides permitting storage and release.

An antimicrobial material for surface coating comprising: (a) biocides comprising at least one antimicrobial component selected from the group consisting of chlorine dioxide, hydrogen peroxide, peroxy acids, alcoholic compounds, phenolic compounds, essential oils, antimicrobial components of essential oils, bleach, antibiotics, antimicrobial phytochemicals, and combinations thereof; and inorganic-organic shells permeable to the biocides, comprising inorganic materials selected from the group consisting of metal oxides, metal complexes, metal salts, metal particles and combinations thereof; and organic materials comprising a nonionic polymer; wherein the inorganic materials are present in a concentration of 0.5-95 wt% of the inorganic-organic shells; and wherein the inorganic-organic shells enclose and contain the biocides permitting storage and release, is also disclosed.

The present subject matter, in a further embodiment is directed to a method of producing antimicrobial coating material for application to porous materials or porous media, the method comprising the steps of: (a) preparing a biocide mixture, wherein the biocide mixture comprises at least one antimicrobial component selected from the group consisting of chlorine dioxide, hydrogen peroxide, peroxy acids, alcoholic compounds, phenolic compounds, essential oils, antimicrobial components of essential oils, antimicrobial phytochemicals and combinations thereof; (b) preparing a suspension/solution of nonionic polymers and inorganic materials, the inorganic material being selected from the group consisting of metal oxides, which are selected from the group of titania sol, silica sol, and alumina sol, metal complexes, which are titanium peroxo complex sol, and combinations thereof; (c) preparing a stable sol suspension comprising the biocide mixture encapsulated within inorganic-organic shells, the inorganic-organic shells comprising the suspension/solution of the nonionic polymer and the inorganic material, wherein the inorganic material is present in a concentration of 0.5-95 wt% of the inorganic-organic shells; and (d) applying the antimicrobial coating material on a porous material or in a porous medium to form an antimicrobial surface exhibiting a combination of release-killing, contact- killing and anti-adhesion properties against microorganisms.

A method of producing an antimicrobial coating for application to porous materials or porous media, the method comprising: (a) preparing a biocide mixture; (b) preparing a suspension/solution of nonionic polymers and inorganic materials, the inorganic material being selected from the group consisting of metal oxides, metal complexes, metal salts, metal particles and combinations thereof; (c) preparing a stable emulsion comprising the biocide mixture encapsulated within inorganic-organic shells, the inorganic-organic shells comprising the suspension/solution of the nonionic polymer and the inorganic material; and (d) applying the antimicrobial coating on a porous material or in a porous medium, is also disclosed.

A porous antimicrobial object, comprising a porous material or a porous medium with an antimicrobial coating produced by (a) preparing a biocide mixture; (b) preparing a suspension/solution of nonionic polymers and inorganic materials, the inorganic material being selected from the group consisting of metal oxides, metal complexes, metal salts, metal particles and combinations thereof; (c) preparing a stable emulsion comprising the biocide mixture encapsulated within inorganic-organic shells, the inorganic-organic shells comprising the suspension/solution of the nonionic polymer and the inorganic material; and (d) applying the antimicrobial coating on a porous material or in a porous medium, is disclosed.

The present subject matter includes any one or more of the embodiments, or elements thereof, described herein, or permutation or combination of some or all of the embodiments, or the elements thereof, described herein.

### BRIEF DESCRIPTION OF THE DRAWINGS

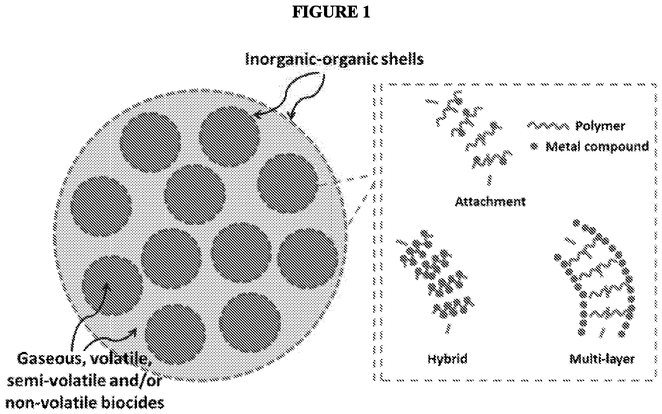

Fig. 1 is a schematic drawing of the encapsulated structure of the antimicrobial material based on encapsulation of gaseous, volatile, semi-volatile and/or non-volatile biocides within inorganic-organic capsules.

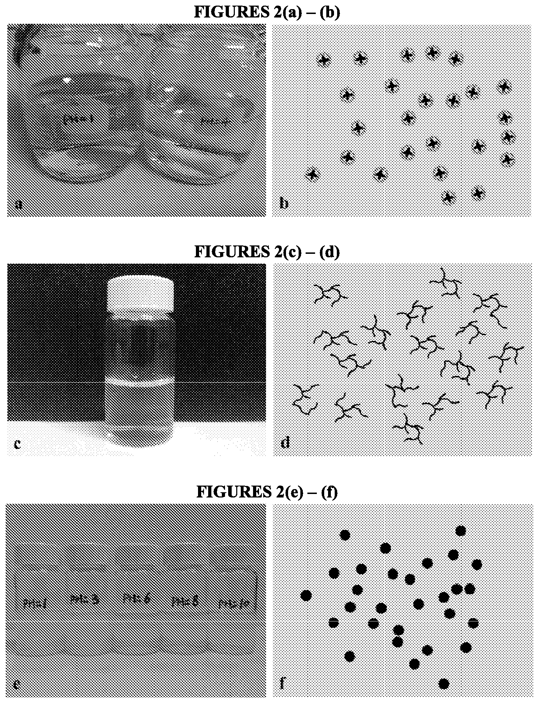

**Figs. 2(a)** through 2**(f)** illustrates different silica materials and their structural representations, including **(a)** and **(b)** depicting silica sol prepared from water soluble silica, **(c)** and **(d)** depicting silica sol prepared from silicon alkoxide and **(e)** and **(f)** depicting silica sol prepared from colloidal silica.

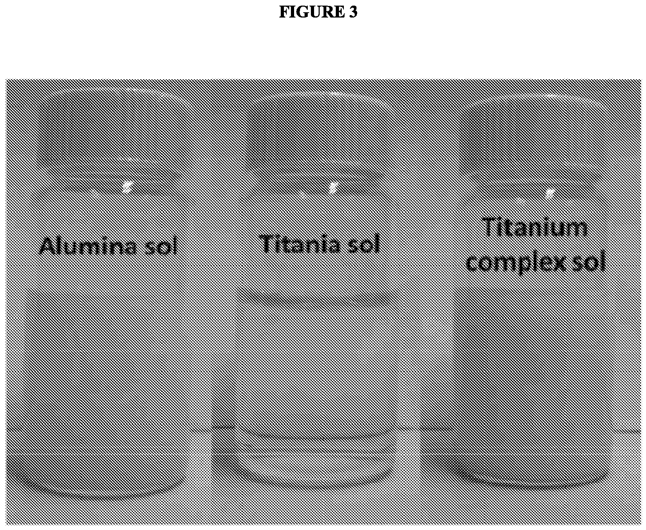

**Fig. 3** shows different metal oxide and metal complex materials, including boehmite alumina sol, titania sol and titanium peroxo complex sol.

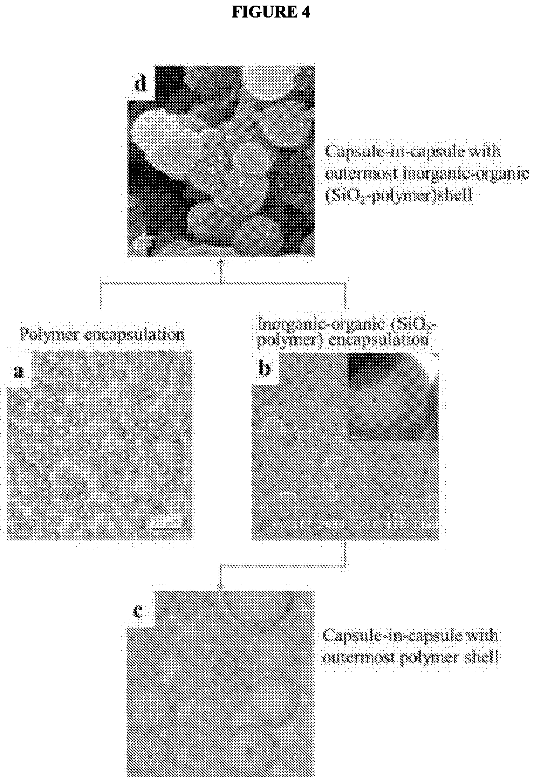

**Figs. 4(a)** through **4(d)** are optical microscopy and SEM images of examples of the antimicrobial materials. (a) thyme oil encapsulated within polyvinyl alcohol (PVA)-polyethylenimine (PEI) polymer capsule; (b) chlorine dioxide contained within **SiO₂**-HO(CH₂CH₂O)₂₀(CH₂CH(CH₃)O)₇₀(CH₂CH₂O)₂₀H block copolymer capsule. These primary capsules can be further contained within larger capsule to create capsule-in-capsule materials such as (c) where the antimicrobial material in (b) is encapsulated within HO(CH₂CH₂O)₁₀₆(CH₂CH(CH₃)O)₇₀(CH₂CH₂O)₁₀₆H block copolymer and (d) where the antimicrobial material in (b) is encapsulated within another SiO₂-HO(CH₂CH₂O)₂₀(CH₂CH(CH₃)O)₇₀(CH₂CH₂O)₂₀H shell.

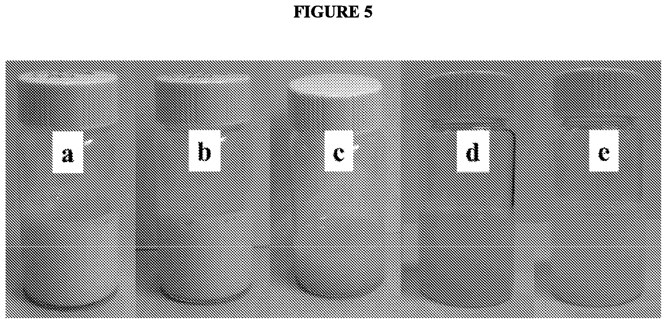

**Fig. 5** shows the prepared formulations of the antimicrobial materials based on (a) thyme oil encapsulated within PVA-PEI shell and its corresponding (b) capsule-in-capsule form with inorganic-organic SiO₂-HO(CH₂CH₂O)₁₀₆(CH₂CH(CH₃)O)₇₀(CH₂CH₂O)₁₀₆H shell; (c) chlorine dioxide solution encapsulated within inorganic-organic SiO₂-HO(CH₂CH₂O)₂₀(CH₂CH(CH₃)O)₇₀(CH₂CH₂O)₂₀H shell and its corresponding capsule-in-capsule forms with (d) outer shells of HO(CH₂CH₂O)₁₀₆(CH₂CH(CH₃)O)₇₀(CH₂CH₂O)₁₀₆H block copolymer and (e) inorganic-organic SiO₂-HO(CH₂CH₂O)₂₀(CH₂CH(CH₃)O)₇₀(CH₂CH₂O)₂₀H polymer.

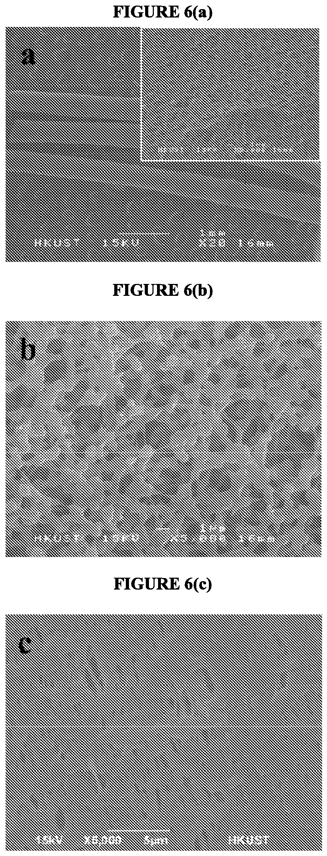

**Figs. 6(a)** through **6(f)** are SEM images of different porous filtration media made from synthetic and natural polymers including (a) polysulfate hollow-fiber, (b) polyvinylidene fluoride, (c) polyethylene, (d) cellulose triacetate and (e, f) commercial filters from 3M® company (Filtrete™ 1200 and Filtrete™ 1900).

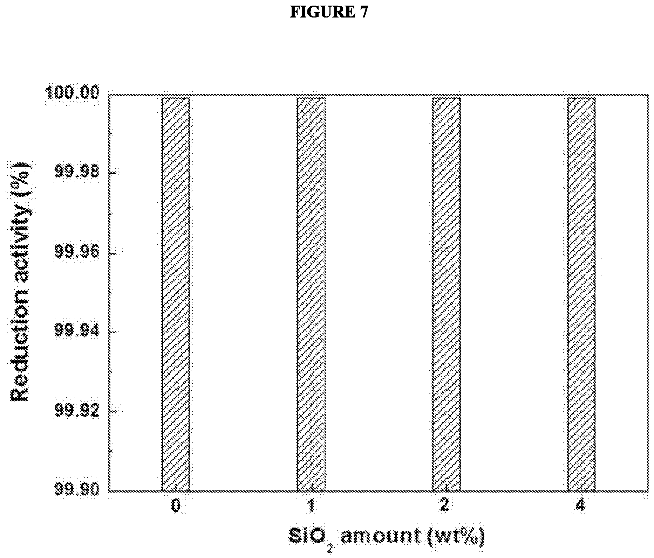

**Fig. 7** presents the bactericidal activities against 10⁶ CFU/ml heterotrophic bacteria of capsule-in-capsule antimicrobial coatings comprising polymer-encapsulated ClO₂ capsules enclosed within outermost SiO₂-polymer shells and polymer shell.

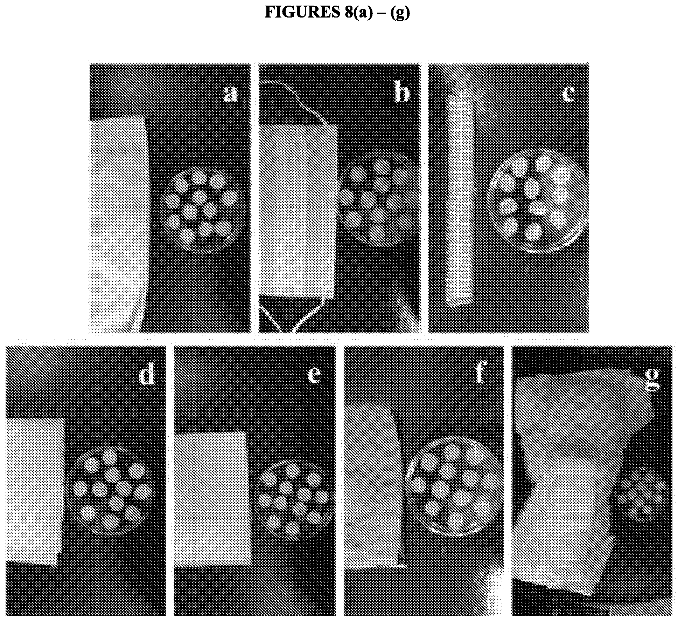

**Figs. 8(a)** through **8(g)** show initial porous materials and porous materials with capsule-in-capsule antimicrobial coatings, including (a) laboratory gown (cotton and polyester fibers), (b) surgical disposable face mask (spun bonded and melt blown nonwoven fibers), (c) bouffant cap (polypropylene), (d) cellulose wipers, (e) polypropylene wipers, (f) medical gown (cotton and polyester) and (g) diaper liner, respectively.

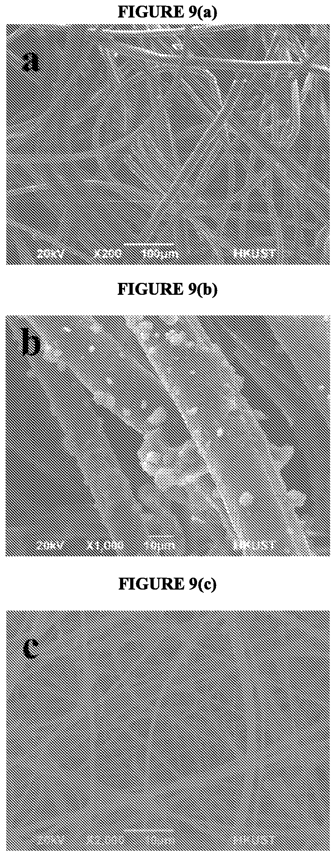

**Figs. 9(a)** through **9(f)** are SEM images of (a, c, e) uncoated air filters and (b, d, f) air filters coated with polymer-encapsulated ClO₂ capsules enclosed within outermost SiO₂-polymer shells, including (a, b) polymer HVAC filter, (c, d) glass HEPA filter and (e, f) polymer HEPA filter.

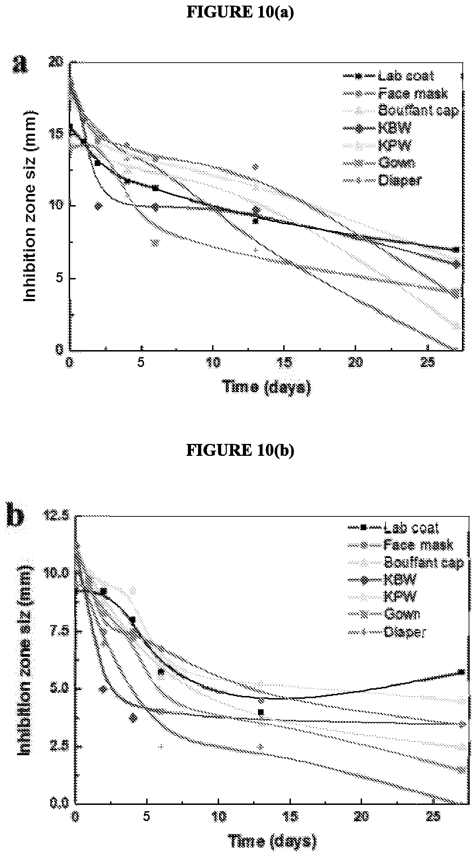

**Figs. 10(a)** through **10(d)** depict the sizes of the inhibition zones of different porous materials with capsule-in-capsule antimicrobial coatings over 28 days for (a) 10⁴ CFU/ml *Cladosporium* spores and 10⁵ CFU/ml (b) *E. coli,* (c) *MRSA* and (d) S. *aureus.*

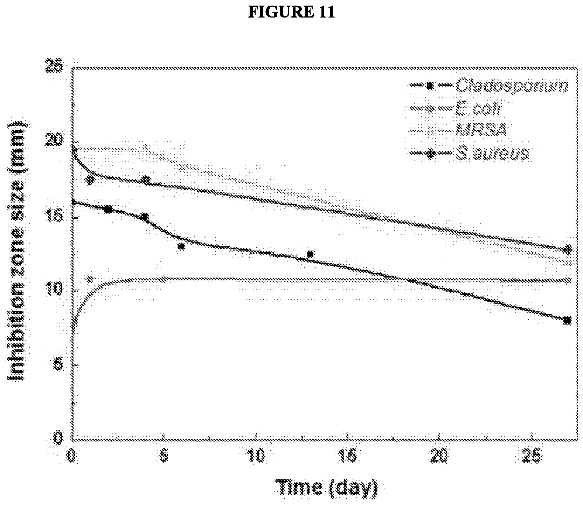

**Fig. 11** presents the sizes of the inhibition zones of coated HEPA filter over 28 days for 10⁴ CFU/ml *Cladosporium* spores and 10⁵ CFU/ml *E. coli, MRSA* and S. *aureus.*

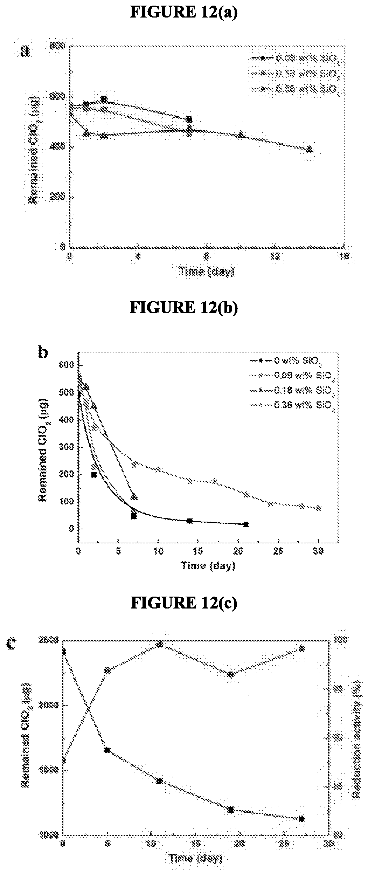

**Figs. 12(a)** through **12(c)** are the plots of residual ClO₂ in coated (ClO₂ capsules enclosed within outermost SiO₂-polymer shell) HVAC filters (a) at room temperature and (b) at 50°C for accelerated life test and (c) the corresponding bactericidal activities against 10⁵ CFU/ml S. *aureus,* respectively.

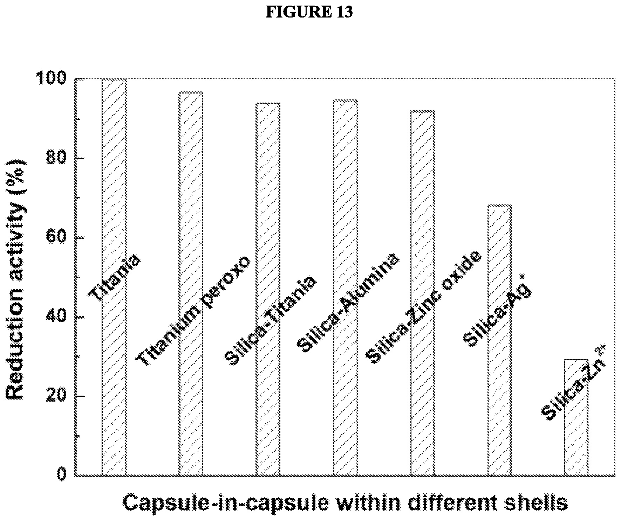

**Fig. 13** represents bactericidal activities against 10⁵ CFU/ml S. *aureus* of the coatings prepared from polymer-encapsulated ClO₂ capsules enclosed within outermost metal oxide-polymer shell, metal complex-polymer shell, mixed metal oxide-polymer shells and metal oxide-metal ion-polymer shells.

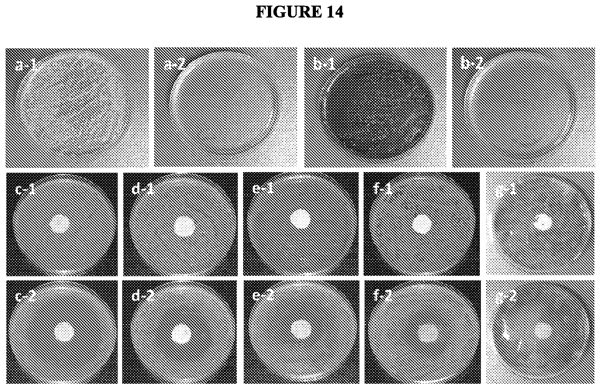

**Fig. 14** presents the results of (a, b) release bactericidal and (c-g) inhibition zone tests for (a, d) S. *aureus,* (b, e) *Pseudomonas,* (c) *E. coli,* (f) *B. subtilis* and (g) *Cladosporium* spores of (1) uncoated HEPA filters and (2) HEPA filters coated with polymer-encapsulated ClO₂ capsules enclosed within outermost SiO₂-polymer shells.

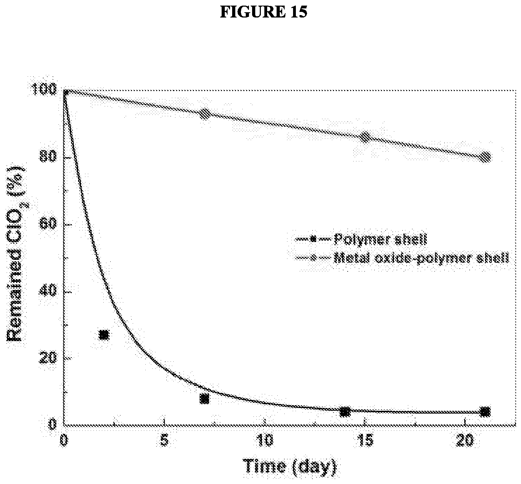

**Fig. 15** presents release curves of ClO₂ during accelerated life test at 50°C of the coatings prepared from polymer-encapsulated ClO₂ capsules enclosed within outermost polymer and metal oxide-polymer shells.

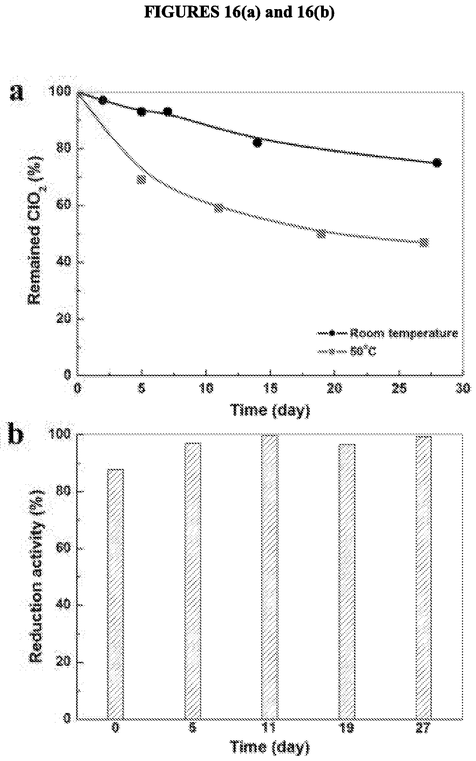

**Figs. 16(a)** and **16(b)** show release curves of biocide (ClO₂) at room temperature and during accelerated life test at 50°C of glass slides coated with polymer-encapsulated ClO₂ capsules enclosed within outermost metal oxide-polymer shells and bactericidal activities against 10⁵ CFU/ml S. *aureus* of these glass slides with coatings stored at 50°C after different days.

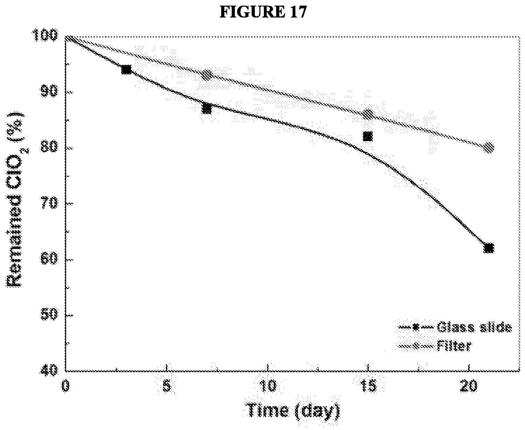

**Fig. 17** represents release curves of biocide (ClO₂) during accelerated life test at 50°C of glass slides and HEPA filters coated with polymer-encapsulated ClO₂ capsules enclosed within outermost metal oxide-polymer shells.

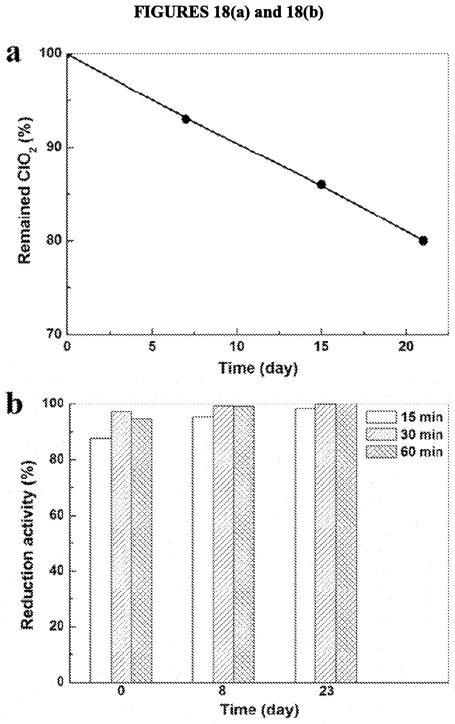

**Fig. 18 (a)** and **18(b)** show release curves of biocide (ClO₂) during accelerated life test at 50°C of polymer microfibers coated with polymer-encapsulated ClO₂ capsules enclosed within outermost metal oxide-polymer shells and bactericidal activities against 10⁵ CFU/ml S. *aureus* with different contact time (15 min, 30 min and 60 min) of these polymer microfibers with coatings stored at 50°C after different days.

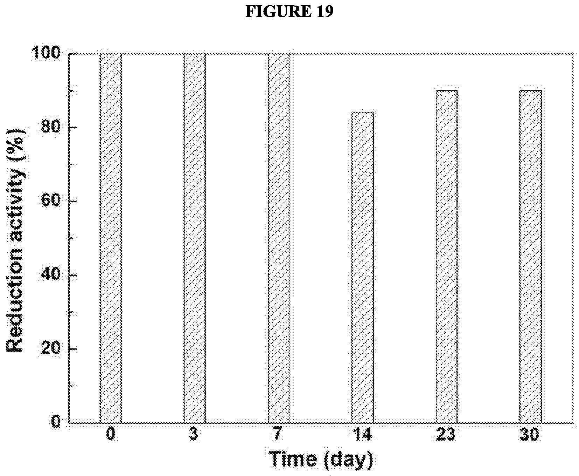

**Fig. 19** shows bactericidal activities against 10⁵ CFU/ml S. *aureus* of polymer microfibers coated with thyme oil encapsulated within metal oxide-polymer shells stored at 50°C after different days.

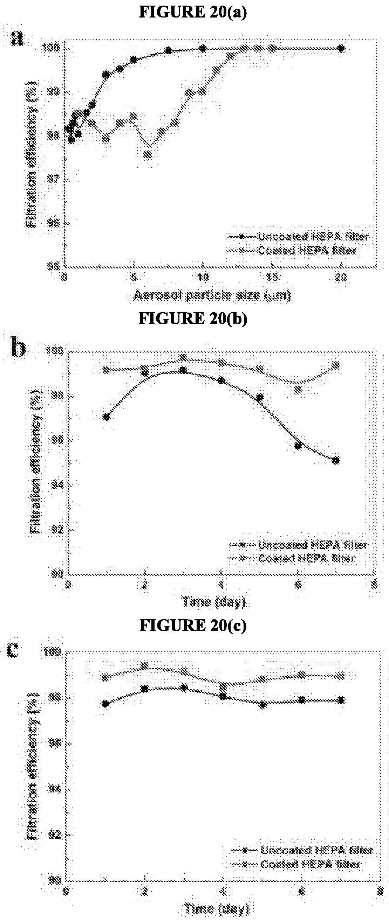

**Figs. 20(a)** through **20(c)** illustrate size-dependent filtration efficiencies for (a) glycerol aerosol, long-term filtration efficiencies for (b) *E. coli* aerosol and (c) *bacteriophage T4* aerosolof uncoated HEPA filters and HEPA filters coated with polymer-encapsulated ClO₂ capsules enclosed within outermost metal oxide-polymer shells at room temperature.

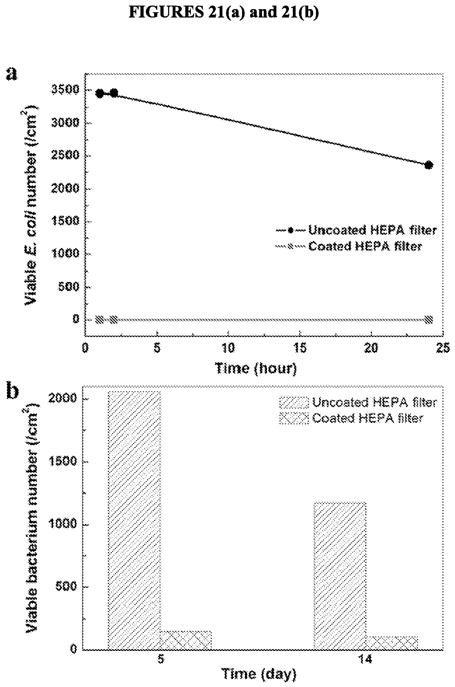

**Figs. 21(a)** and **21(b)** present viable *E. coli* numbers after spraying *E. coli* suspension and viable bacterium numbers under real filtration conditions on uncoated HEPA filters and HEPA filters coated with polymer-encapsulated ClO₂ capsules enclosed within outermost metal oxide-polymer shells after different time.

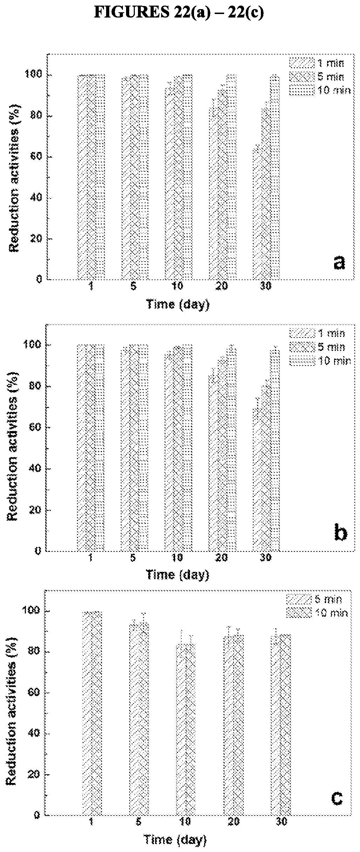

**Figs 22(a)** through **22(c)** demonstrate long-term virucidal activities against 10⁸ PFU/ml H1N1, H3N2 and Enterovirus 71, respectively, with different contact time (1 min, 5 min and 10 min) of HEPA filters coated with polymer-encapsulated ClO₂ capsules enclosed within outermost metal oxide-polymer shells at room temperature.

### DETAILED DESCRIPTION

The instant subject matter relates to biocidal materials having a combination of contact and time-release biocide properties. The materials are capable of providing for both antimicrobial and anti-adhesion properties. The materials are specifically designed for incorporation into filtration systems, for example, air and water filters. Specifically, the subject matter relates to an antimicrobial coating for porous materials or porous media, comprising a colloidal encapsulation structure with gaseous, volatile, semi-volatile and/or non-volatile biocides enclosed with inorganic-organic shells permeable to the biocides. As discussed herein, the coatings of the present subject matter comprise various components, meaning the coatings include at least the recited components. However, it is also contemplated the coatings consist of the various recited components, meaning the coating is limited to the recited components.

The biocides may be, but are not limited to, chlorine dioxide, hydrogen peroxide, peroxy acids, alcoholic and phenolic compounds, essential oils and their effective components, and combinations thereof, as well as any commercially available biocides, such as bleach, antibiotics, antimicrobial phytochemicals, and combinations thereof. Examples of essential oils are, but are not limited to, thyme oil, tea tree oil, rosemary oil, eucalyptus oil, citral oil, their effective, antimicrobial components and other essential oils with antimicrobial activity. The essential oils may be diluted with solvents. Suitable solvents are, but are not limited to, ethylene glycol, propylene glycol, glycerol, dipropylene glycol, polyethylene glycol, and combinations thereof.

The inorganic-organic shell comprises organic materials and inorganic materials that accounts at least 0.5 wt% of the shell materials. Examples of the organic materials are, but are not limited to, nonionic polymers, such as polyethylene glycol, polyvinyl alcohol, polyvinylpyrrolidone, polyetherimide, polyethyleneimine and combinations thereof. Specific nonionic polymers are, but are not limited to, poly(ethylene oxide)-poly(propylene oxide)-poly(ethylene oxide), poly(ethylene glycol)-poly(propylene glycol)-poly(ethylene glycol), other amphiphilic block copolymers, and combinations thereof. The inorganic materials are present in a concentration of 0.5-95 wt% of the inorganic-organic shells. The inorganic materials are, but are not limited to, metal oxides, metal complexes, metal salts, metal particles and combinations thereof. The addition of inorganic materials into inorganic-organic shells improves the durability and performance of the antimicrobial coatings particularly above room temperature. The metal oxides are, but are not limited to, alumina sol, copper oxide sol, silica sol, silver oxide sol, titania sol, zinc sol, zirconia sol and combinations thereof. The metal oxide sol may be derived from a water-soluble metal salt, a metal alkoxide or commercially available colloidal metal oxides The metal complex are, but are not limited to complexes of metals such as silver, copper, zinc and combinations thereof. The metal complex may be derived from a water-soluble metal salts and metal hydroxides. The metal salts are nitrates, sulfates and halides of silver, copper, zinc and combinations thereof. The metal particles include silver, copper, zinc and combinations thereof.

Regarding the use of amphiphilic block copolymers in the inorganic-organic shell, it is important to note these are nonionic and are used in conjunction with inorganic materials as shown in Fig. 1. Thus, the volatile or semi-volatile biocides according to the instant subject matter are not enclosed in only an amphiphilic block copolymer but specifically in an inorganic-organic shell.

It is important to note the inorganic materials, according to the instant subject matter, for example metal, metal oxides, metal complexes, metal salts and metal nanoparticles, and combination thereof, are employed as part of the inorganic-organic shells and are not used as biocides. This is shown in the Examples, where the metals function as part of the inorganic-organic shell and not as a biocide. The inorganic component also influences the size and rigidity of the pores in the encapsulating shell and thus affects the release rate of the contained biocides.

It is important to note that when the inorganic material is a silica sol, the precursor is a sodium silicate solution. Furthermore, insofar as the instant inorganic-organic shell possesses a three-dimensional nature, use of silica or silica sol according to the instant subject matter does not result in the forming of a three dimensional silica network.

Production of the instant subject matter does not require sequential steps. Generally speaking, the antimicrobial material is prepared by storing the biocide mixture in the core of a shell made from a combination of an inorganic component of metal oxides, metal complexes, metal salts or metal particles, or combinations thereof with an organic component mainly comprising nonionic polymers. Specifically, this is done by mixing the biocide mixture with the prepared inorganic-organic mixture under required pH, concentration and temperature to induce the encapsulation of the biocide within an inorganic-organic shell. For example, chlorine dioxide dissolved in water solution containing hydrogen peroxide can be encapsulated within an inorganic-organic shell comprising of silica and polymer at room temperature and neutral pH. A mixture of phenolic compounds in essential oil is encapsulated within an inorganic-organic shell comprising of a metal compound and polymer at room temperature. Further encapsulation can be performed to create capsule-in-capsule structure to better control the release dosing of the biocides.

The present antimicrobial materials can be coated on surfaces by wiping, brushing, casting, dip-coating, spin-coating or spraying. The resulting antimicrobial coating exhibits the advantages of the different components displaying a multi-level, wide-spectrum and durable antimicrobial performance at broad range of temperatures. Further, the instant coatings are employed in methods for preparing a porous antimicrobial object, as well as providing additional multi-level antimicrobial activity to a porous object without changing its pore-related properties and functions. In other words, the porous material will function as originally intended with the added benefit and result of the coating as described herein.

The biocide mixtures were prepared from one or more gaseous, volatile, semi-volatile and/or non-volatile biocides. The biocides include disinfectants, germicides and antimicrobial volatile or semi-volative phytochemicals (VSPs). The typical embodiments include chlorine dioxide, hydrogen peroxide, peroxy acids, alcoholic, bleach and phenolic compounds, VSPs and combinations thereof, as well as any commercially available biocides. The antimicrobial volatile or semi-volatile phytochemicals include essential oils or their active components such as agarwood oil, cajuput oil, cananga oil, cinnamon bark oil, citronella oil, clove oil, eucalyptus oil, fennel oil, ginger oil, kaffir lime oil, nutmeg oil, ollium xanthorrhiza oil, origanum oil, patchouli oil, rosemary oil, sandalwood oil, tea tree oil, thyme oil and vetiver oil.

Metal oxide sols such as alumina sol, copper sol, silica sol, silver oxide sol, titania sol, zinc sol and zirconia sol were prepared by hydrolyzing or peptizing water-soluble salt, metal alkoxide or commercial colloidal metal oxide in acidic or basic media. A typical embodiment is silica sol because it has good chemical stability and biocompatibility. For the preparation of silica sol from water-soluble salt, diluted inorganic acid was added dropwise into water-soluble silicate solution under vigorous stirring to obtain a silica sol with the appropriate pH value. A typical silica concentration is in the range of 0-0.6 mol/1. For the preparation of silica sol from silicon alkoxide, diluted inorganic acid was added into tetraethyl orthosilicate. The prepared emulsion was stirred above room temperature to obtain clear silica sol with weak acidity. For the preparation of silica sol from commercial colloidal silica, diluted inorganic acid was added drop by drop into commercial colloidal silica such as Ludox products under vigorous stirring. The ranges of sol concentration and pH value depend on initial colloidal silica.

Metal complex such as copper, silver, titanium and zinc complex were prepared by reacting metal salts or metal hydroxides with ligands in water or solvents. Metal salt solutions such as silver nitrate, copper chloride, and zinc chloride can be added to form the inorganic-organic shells.

The antimicrobial material is prepared by encapsulating biocides within an inorganic-organic shell. This is done by mixing the biocide(s) with the pre-reacted inorganic-organic mixture of polymer and metal oxides, metal complexes, metal salts or metal particles at room temperature to create a stable emulsion stabilized by the inorganic-organic shells. The typical concentration range of the metal oxide or metal complex in the inorganic-organic shell and final antimicrobial material is 0.5-95 wt% and 0-5 wt%, respectively.

Various porous materials and porous media were used as substrates for coating with the instant antimicrobial material. Porous materials include, but are not limited to, personal protective equipment, i.e. lab coats, facial masks, shoe covers and hair caps, household products, i.e. tissues, linens, napkins, curtains and tablecloths, clothes and infant products, i.e. diapers, wipes and toys. Porous media may include membranes and filters made up of different materials such as polymers, ceramics and metals. Typical embodiments are commercial polyethylene membrane and HEPA filters.

An antimicrobial coating according to the instant subject matter was prepared by applying antimicrobial material on porous materials and porous media.

Optical microscopy images of biocide capsule emulsions were collected on Olympus BH2-MJLT microscope. SEM images of biocide capsule emulsions, initial porous filters and porous filters with antimicrobial coating were made using JEOL JSM-6390 and JSM-6300F scanning electron microscopes equipped with energy dispersive X-ray detectors. Fig. 1 represents a schematic diagram of the encapsulation structure of the instant antimicrobial material. The antimicrobial material is a stable sol suspension of biocide(s) encapsulated within inorganic-organic shell(s). The biocide(s) consisting of at least one gaseous, volatile or semi-volatile component can be released without requiring a water-bridge. The inorganic-organic shell consists of a polymer network stabilized with inorganic metal oxides, metal complexes, metal salts or metal nanoparticles that by themselves may or may not exhibit biocidal activities. The structure of the shell can vary depending on the interaction between the polymer and the inorganic components as shown in the "Attachment" structure in Fig. 1. Uniform distribution of polymer and inorganic components within the shell results in the "Hybrid" structure in Fig. 1, while a "Layered or Multi-layered" structure in Fig. 1 can result from diffusion limited interaction. This "multi-layered" shell can be formed at an oil/water interface depending on concentration, surface functional group, surface charge and solubility of metal compound, and hydrophilic/hydrophobic property and concentration of polymer. The instant antimicrobial material combines the advantages of the individual components: good antimicrobial activity and excellent surface adhesion property, which are important properties of a good coating.

Figs. 2(a) through (f) illustrate different silica materials and their structural representations. Figs. 2(a) and 2(b) depict silica sol prepared from water soluble silica, while Figs. 2(c) and 2(d) show silica sol prepared from silicon alkoxide. Figs. 2(e) and 2(f) represent silica sol prepared from colloidal silica. The different silica materials and their preparations are provided in the following Examples.

The judicious selection of biocides, inorganic and organic components, along with the appropriate coating procedure, the use of antimicrobial material doesn't change function-related physical properties of porous media or porous materials, such as filtration performance, color and macroscopic morphology. Fig. 3 presents different inorganic materials for making inorganic-organic shells of biocide capsules of metal oxide (i.e., boehmite alumina sol and titania sol) and metal complex (i.e., titanium peroxo) sols. A stable mixed suspension of polymer and metal oxide/complex sol without any precipitations can be prepared for further making inorganic-organic shells by mixing polymer solution and metal oxide/complex sol at appropriate concentrations and pH values.

Fig. 4 and Fig. 5 present the optical microscopy and scanning electron microscopy images of biocide capsules enclosed within organic and inorganic-organic shells and their photos (Fig. 5), respectively. Fig. 4 clearly depicts the structures of the biocide capsule (single shell) and capsule-in-capsule (multi shell). As shown in Fig. 5, biocide capsules may be prepared as stable semi-transparent sol suspension of different colors depending on concentration and type of biocide, shell material and pH value.

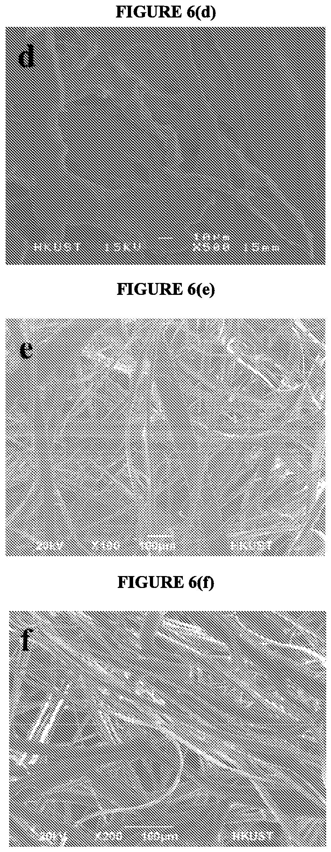

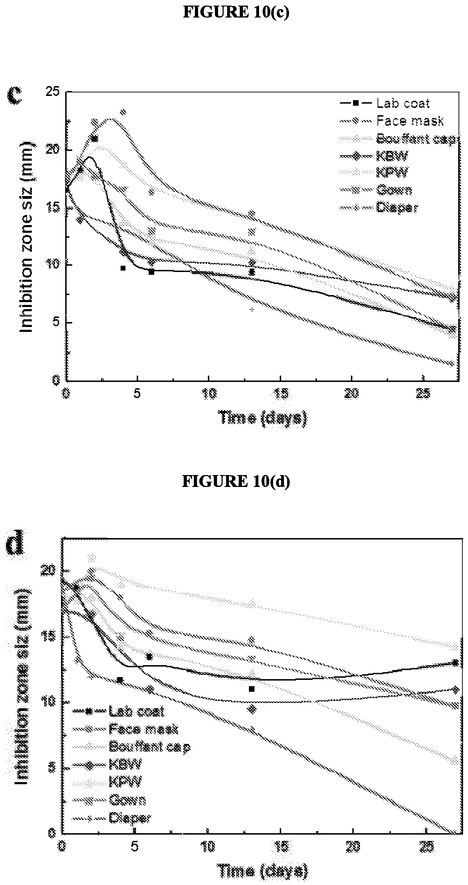

Fig. 6 illustrates SEM images of common porous filtration media made up of different polymer materials, and exhibits different porous structures and morphologies. Polysulfate, polyvinylidene fluoride, polyethylene and cellulose triacetate membranes (Figs. 6(a) through 6(d)) are widely applied in the fields of water filtration and water purification. Figs. 6(e) and 6(f) are SEM images of two commercial air filters from 3M® company. They are made up of electrostatically charged fibers and verified to be effective for removing large airborne allergens. The antimicrobial material may be applied on these common porous filtration media to impart bactericidal and sporicidal activities as illustrated in Figs. 10, 11, 12, 14, 20, 21, 22 and Table 1.

Fig. 7 presents antimicrobial activities of the coatings prepared from capsule-in-capsule with outermost inorganic-organic shell (i.e., 1 wt% SiO₂, 2 wt% SiO₂ and 4 wt% SiO₂) and capsule-in-capsule with outermost organic shell (i.e., 0 wt% SiO₂). Antimicrobial coatings prepared by selecting silica sol as inorganic material via similar method with Example 27 exhibit 99.999% reduction activities against 10⁶ CFU/ml bacteria even when silica amount was increased to 4 wt%.

Figs. 8(a) through 8(g) show common porous materials including personal protective equipment (a-c), household products (d and e), clothes (f) and infant product (g). After coating with the antimicrobial material, obvious changes such as fading, shrinking, cracking and dissolving do not appear, which indicates that the antimicrobial material has a good compatibilities with these porous materials.

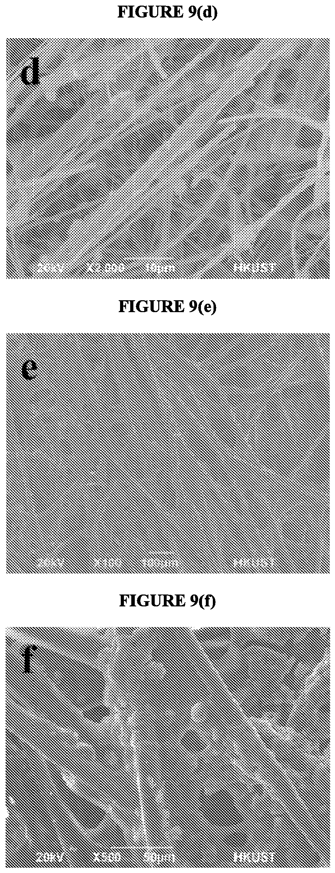

Fig. 9 presents SEM images of a macroporous filter and two HEPA filters at different stages, e.g. initially and after coating biocide capsule emulsion. Though three filters have different porosities and morphologies, all filters coated with biocide capsule emulsion show the presence of small capsules attached on the smooth surface of the fibers. There is no apparent blockage of the flow channels and the gas flow remains the same after coating. These results indicate that antimicrobial material is compatible for the use in porous filtration media.

Fig. 10 displays the sizes of inhibition zone for 10⁴ CFU/ml mold (*Cladosporium*) and 10⁵ CFU/ml bacteria (*E. coli, MRSA* and S. *aureus*) of porous materials coated with the antimicrobial material. Generally, fresh-prepared samples have better inhibition capacities for mold and bacteria. The inhibition zone sizes of most samples decreased after four weeks as to be expected with the sustained release of the biocide. The uncoated porous materials did not have any inhibition zones for mold and bacteria.

Fig. 11 presents the sizes of the inhibition zone for 10⁴ CFU/ml mold (*Cladosporium*) and 10⁵ CFU/ml bacteria (*E. coli*, *MRSA* and *S. aureus*) of HEPA filters coated with the antimicrobial material. The coated HEPA filter exhibit long-term antimicrobial activity against mold and bacteria. Inhibition zone sizes for *Cladosporium, E. coli, MRSA* and S. *aureus* of the samples stored at room temperature for 27 days are respectively 50%, 147%, 62% and 66% of those of the day 0 samples. Figs. 12(a) and 12(b) show the time-dependent curves of ClO₂ amount on HVAC filters coated with the antimicrobial materials consisting of polymer-encapsulated ClO₂ capsules enclosed within outermost **SiO₂**-polymer shells and polymer shell at room temperature and 50°C. For the samples stored at room temperature, ClO₂ amount remains unchanged. At 50°C, the release of ClO₂ depends on the amount of inorganic SiO₂ in the outermost inorganic-organic shell. Most of the ClO₂ was released within 7 day for the antimicrobial material containing less than 0.2 wt% SiO₂, while sample with 0.36 wt% silica retain 44 and 14 % of the original ClO₂ after the 7^{th} and 30^{th} day. From Fig. 12(c), the preferred sample exhibits much higher ClO₂ loading and improved stability. After 27 days at 50°C, the preferred sample still gives the reduction activity of 99.2% for 10⁵ CFU/ml S. *aureus,* and retain 47% ClO₂ compared to the freshly-prepared sample. These results indicate that the addition of silica sol into polymer shell improves the long-term releasing of the biocides from the antimicrobial coating.

Fig. 13 presents the effect of the inorganic component in the outermost inorganic-organic shell on the antimicrobial activity of double encapsulated chlorine dioxide. The study show that titania-polymer shell has the best antimicrobial activity (99.9% reduction) among the samplesThe antimicrobial material with metal complex (i.e., titanium peroxo)-polymer and mixed metal oxide (i.e., silica-titania, silica-alumina and silica-zinc oxide)-polymer shells exhibit good reduction activities ranging from 91% to 97%, while the coatings with silica-Ag⁺-polymer and silica-Zn²⁺-polymer shells exhibit poor antimicrobial activity of 68.1% and 29.2%, respectively. The inorganic component also influences the size and rigidity of the pores in the encapsulating shell and thus affects the release rate of the contained biocides.

Figs. 14(a) through 14(g) present the results of release antimicrobial test and inhibition zone test of uncoated HEPA filters and HEPA filters coated with polymer-encapsulated ClO₂ capsules enclosed within outmost SiO₂-polymer shells for different bacteria and mold including *S. aureus, Pseudomonas, E. coli, B. subtilis* and *Cladosporium* spores, respectively. Uncoated HEPA filters neither have any release antimicrobial activities nor appear any inhibition zones for different bacteria and mold. Figs. 14(a-2) and (b-2) show no bacterium colonies grow on agar plates, which indicates coated HEPA filters have good release-killing activities. The sizes of inhibition zones shown in Figs. 14 (c-2), (d-2), (e-2), (f-2) and (g-2) are in the range of from 14 mm (for *Pseudomonas*) to 29 mm (for *E. coli*)*.*

Fig. 15 compares ClO₂ release curves of the coatings prepared from polymer-encapsulated ClO₂ capsules enclosed within outmost polymer and metal oxide-polymer shells during an accelerated life test conducted at 50°C. The coating prepared from polymer-encapsulated ClO₂ capsules enclosed within outmost SiO₂-polymer shells exhibits basically constant ClO₂ release rate at 50°C for three weeks, while the coating prepared from polymer-encapsulated ClO₂ capsules enclosed within outmost polymer shells releases ClO₂ rapidly and less than 10 % remained after the first week. It is clear, the addition of metal oxide improves long-term, sustained release property of the coating even at elevated temperature.

Fig. 16 and Fig. 17 present ClO₂ release curves of antimicrobial coatings prepared from polymer-encapsulated ClO₂ capsules enclosed within outmost metal oxide-polymer shells on different substrates (i.e., nonporous glass slide and porous HEPA filter) at different temperatures and long-term antimicrobial activities of antimicrobial coatings stored at 50°C. The average ClO₂ release rate of antimicrobial coating at 50°C is twice that of room temperature on glass over the four-week test, but the antimicrobial material can maintain better than 95% reduction for 10⁵ CFU/ml S. *aureus.* The release rate of coated filter and glass are comparable except at the 21^{st} day.

Fig. 18 and Fig. 19 shows long-term antimicrobial activities of filter made of polymer microfibers coated with the emulsions of capsule-in-capsule (i.e., polymer-encapsulated ClO₂) and capsule (i.e., thyme oil) enclosed within SiO₂-polymer shells stored at 50°C. Fig. 18a plots the ClO₂ remaining in the coating at 50°C. A constant dosing rate of 0.95% ClO₂ per day was maintained with a better than 95% reduction of 10⁵ CFU/ml S. *aureus.* Compared to the samples of capsule-in-capsule, polymer microfibers coated with thyme oil capsules enclosed within SiO₂-polymer shells attained 100% reduction of 10⁵ CFU/ml S. *aureus* during the first week and maintained a bactericidal activities of 84%-90% in the remaining time. This suggests that a double encapsulation can provide a better long-term sustained performance.

Fig. 20 and Fig. 21 present filtration efficiencies for glycerol aerosol, *E.coli* aerosol and *bacteriophage T4* aerosol and viable bacterium numbers under laboratory-test conditions and real filtration conditions of uncoated HEPA filter and HEPA filter coated with polymer-encapsulated ClO₂ capsules enclosed within metal oxide-polymer shells, respectively. After coating capsule-in-capsule emulsion, HEPA filters exhibits slightly decreased filtration efficiencies for glycerol aerosol with the particle size of below 15 micrometers, however, the filtration efficiencies for *E.coli* aerosol and *bacteriophage T4* aerosol are better. After spraying 24 h of challenging the filters with *E. coli* suspension, 68% of *E. coli* remains viable on the uncoated HEPA filters, while no viable *E. coli* can be cultured from the coated HEPA filters. Under real filtration conditions, viable bacterium numbers can be kept below 9 % compared to that of uncoated HEPA filters even after 14 days of continuous operation.

Multi-level antimicrobial activities of antimicrobial coatings are believed to contribute to better filtration efficiencies for bacterium and virus (i.e., bacteriophage) aerosols and inhibit the growth of bacteria on HEPA filters. Table 1 and Fig. 22 show bactericidal and long-term virucidal activities of HEPA filters coated with polymer-encapsulated ClO₂ capsules enclosed within metal oxide-polymer shells. Fresh coated HEPA filters exhibit wide-spectrum antimicrobial activities of above 99% reduction for 10⁶ CFU/ml Gram negative and Gram positive bacteria. After 30 days, coated HEPA filters still remain excellent antimicrobial activities of above 97% reduction for 10⁸ PFU/ml influenza viruses, and moderate antimicrobial activities of above 80% reduction for 10⁸ PFU/ml Enterovirus 71.

**Table 1**

| **Gram negative** | **Reduction** | **Gram positive** | **Reduction** |
|---|---|---|---|
| *Multidrug-resistant Pseudomonas* | 99.79% | *Enterococcus faccium* | 99.85% |
| *Pseudomonas putida* | 99.28% | | |
| *Legionella pneumophilia* | 99.94% | | |
| *Chryseobacterium indologenes* | 99.86% | | |
| *Serratia marcescens* | 99.51 % | | |
| *Klebsilla pneumonia* | 99.63% | | |
| *Enterobacter aerogenus* | 99.84% | | |
| *Stenotrophomonas maltophilia* | 99.93% | | |

Bactericidal activities against 10⁶ CFU/ml Gram negative and Gram positive bacteria with contact time of 10 min of HEPA filters coated with polymer-encapsulated ClO₂ capsules enclosed within outermost metal oxide-polymer shells.

It will be understood that many additional changes in the details, materials, steps and arrangement of parts, which have been herein described and illustrated to explain the nature of the subject matter, may be made by those skilled in the art within the principle and scope of the instant subject matter as further expressed in the claims.

### EXAMPLES

### Example 1

Sodium chlorite powder was dissolved in 50 ml of distilled deionized water to prepare sodium chlorite solution with concentration of 0.1 wt% to 40 wt%. The sodium chlorite solution was then mixed with 0.1 g to 2 g of 30 wt% hydrogen peroxide.

### Example 2

Sodium chlorite powder was dissolved in 50 ml of distilled deionized water to prepare sodium chlorite solution with concentration of 0.1 wt% to 40 wt%. The sodium chlorite solution was then mixed with 0.01 ml to 10 ml of 3% to 8% sodium hypochlorite or potassium hypochlorite solution.

### Example 3

Sodium chlorite powder was dissolved in 50 ml of distilled deionized water to prepare sodium chlorite solution with concentration of 0.1 wt% to 40 wt%. The sodium chlorite solution was then mixed with solutions containing metal ions (Cu²⁺, Zn²⁺ Ag⁺). The final concentration of metal ions ranges from 30 ppm to 3000 ppm.

### Example 4

Sodium chlorite powder was dissolved in 50 ml of distilled deionized water to prepare sodium chlorite solution with concentration of 0.1 wt% to 40 wt%. The sodium chlorite solution was then mixed with metal a micro- and/or nano-particle suspension (copper, zinc, silver). The final concentration of metal particles dispersed into solution ranges from 30 ppm to 30000 ppm.

### Example 5

Sodium chlorite powder was dissolved in 50 ml of distilled deionized water to prepare sodium chlorite solution with concentration of 0.1 wt% to 40 wt%. The sodium chlorite solution was then mixed with peracetic acid. The final concentration of peracetic acid ranges from 0.01 ppm to 10 ppm.

### Example 6

VSP mixtures were prepared of one or more phytochemicals including essential oils, e.g. mixture of thyme oil and tea tree oil, mixture of thymol (active component of thyme oil) and terpinen-4-oil (active component of tea tree oil).

### Example 7

One or more of the components from Example 6 were mixed with 50% to 100% alcohols to form VSP-alcohol mixture. The final concentration of VSP in the mixture varies from 0.1% to 50%.

### Example 8

One or more of the components from Example 6 were mixed with aromatic compounds such as 1% to 10% chloroxylenol solution. The final concentration of VSP in the mixture varies from 0.1% to 50%.

### Example 9

One or more of the components from Example 6 were mixed with solutions containing metal ions (Cu²⁺, Zn²⁺ Ag⁺). The final concentration of metal ions ranges from 30 ppm to 3000 ppm.

### Example 10

One or more of the components from Example 6 were mixed with metal micro- and/or nano-particle suspension such as copper, zinc, silver. The final concentration of metal particles dispersed into solution ranges from 30 ppm to 30000 ppm.

### Example 11

Biocide mixture from Examples 1-5 was encapsulated within a polymer shell (polyethylene glycol (PEG) with the molecular weight of 400 to 40000, polyvinyl alcohol (PVA) with the molecular weight of 31000 to 186000, polyvinyl pyrrolidone (PVP) with the molecular weight of 10000 to 360000, polyethylenimine (PEI) with the molecular weight of 1200 to 60000, PEO-PPO-PEO with the molecular weight of 1000 to 8000, and a combination of two or more thereof). The polymer shell was formed by adding the biocide mixture dropwise into the polymer solution under vigorous stirring. The emulsion can also be ultrasonically-treated for 1 minute.

### Example 12

Biocide mixture from Examples 6-10 was encapsulated within a polymer shell (PEG with the molecular weight of 400 to 40000, PVA with the molecular weight of 31000 to 186000, PVP with the molecular weight of 10000 to 360000, PEI with the molecular weight of 1200 to 60000, PEO-PPO-PEO with the molecular weight of 1000 to 8000). The polymer shell was formed by adding the biocide mixture dropwise into the polymer solution under vigorous stirring. The emulsion was then ultrasonic-treated for 1 minute.

### Example 13

Sodium silicate solution (2.88 g) was diluted with double deionized (DDI) water to obtain 40 ml of sodium silicate solution with 0.25 mol/l NaOH and 0.32 mol/l SiO₂. Diluted nitric acid (1 mol/1, 8.20 ml) was added dropwise into the diluted sodium silicate solution under vigorous stirring to obtain acidic silica sol with pH value of 4.

### Example 14

Sodium silicate solution (2.88 g) was diluted with DDI water to obtain 40 ml sodium silicate solution with 0.25 mol/l NaOH and 0.32 mol/l SiO₂. Diluted nitric acid (1 mol/1, 15.56 ml) was added dropwise into the diluted sodium silicate solution under vigorous stirring to obtain acidic silica sol with pH value of 1.

### Example 15

Sodium silicate solution (2.00 g) was mixed with DDI water (52 g), followed by adding diluted hydrochloric acid (1 mol/1, 7.24 ml) dropwise under vigorous stirring to obtain acidic silica sol with pH value of 6.

### Example 16

Commercially obtained dispal boehmite sol (20 wt%) was diluted with DDI water to obtain alumina sol with the concentration of 1-15 wt%.

### Example 17

Titanium isopropoxide (10 ml) was dissolved in isopropanol (23.6 ml), followed by adding HNO₃ (2 mol/1, 3.4 ml) and DDI water (31.4 ml) under vigorous stirring to obtain an opaque suspension. The suspension was further stirred at 80°C to evaporate the isopropanol and to peptize the titania precipitate. This was followed by cooling down to room temperature and stirring for overnight to obtain a clear titania sol (1 mol/1).

### Example 18

Copper (II) nitrate was dissolved in DDI water, followed by adding sodium citrate aqueous solution to prepare copper (II) citrate complex sol or aqueous suspension depending on the concentrations of copper (II) nitrate and sodium citrate. The obtained copper (II) citrate complex aqueous suspension was further filtered to obtain a clear copper (II) citrate complex sol.

### Example 19

Titanium(IV) tetrabutoxide (4.8 g) was hydrolyzed with DDI water (100 ml). The obtained titanium hydroxide precipitate was washed thoroughly with DDI water, and dissolved in hydrogen peroxide (30 wt%, 75 ml) to obtain a transparent orange titanium peroxo-complex sol. The sol was diluted with water to obtain the solution of different concentrations.

### Example 20

Zinc sulfate was dissolved in DDI water, followed by the addition of sodium hydroxide solution with slightly lower stoichiometric ratio to prepare a zinc hydroxide precipitate. The obtained zinc hydroxide precipitate was washed with DDI water and redispersed in a citric acid aqueous solution. The obtained mixture was further stirred for overnight and filtered to obtain a clear zinc citrate complex sol.

### Example 21

Silver nitrate was dissolved in DDI water in a brown bottle, followed by adding an ascorbic acid aqueous solution under vigorous stirring to obtain a silver/silver-ascorbic acid complex sol.

### Example 22

Biocide mixture from Examples 6-10 was added dropwise into a mixed suspension/solution containing a polymer used in Examples 11 and 12 and an inorganic material (Examples 13-21) under vigorous stirring. The mixture was then ultrasonic-treated for 1 minute to form an inorganic-organic shell.

### Example 23

Biocide mixture from Examples 6-10 was added dropwise into a mixed solution containing a polymer used in Examples 11 and 12 and a metal alkoxide under vigorous stirring. The mixture was then ultrasonic-treated for 1 minute to form an inorganic-organic shell by a hybrid of inorganic network interpenetrating the organic network.

### Example 24

Biocide mixture from Examples 6-10 was added dropwise into a polymeric organosilicon (e.g., polydimethylsiloxane) under vigorous stirring. The mixture was ultrasonic-treated for 1 minute to form an inorganic-organic shell formed by a molecularly mixed inorganic-organic network.

### Example 25

Polymer-encapsulated biocide from Examples 11 & 12 was added dropwise into secondary polymer solution under vigorous stirring. The secondary polymer can be PEG, PVA, PVP, PEI, PEO-PPO-PEO used in Examples 11 & 12 and a combination of two and more thereof. The mixture was then ultrasonic-treated for 1 minute to form capsule-in-capsule encapsulation with innermost polymer shell and outermost polymer shell.

In Fig. 7 and Fig. 12b, 0 wt% SiO₂ sample was PEO-PPO-PEO-encapsulated biocide (Biocide: Example 3, Encapsulation: Example 11) with outermost PEO-PPO-PEO shell (Example 25). Various wt% SiO₂ samples were PEO-PPO-PEO-encapsulated biocide (Biocide: Example 3, Encapsulation: Example 11) with outermost SiO₂-PEO-PPO-PEO shell (Example 27). The addition of SiO₂ improved long-term ClO₂ release property without lowering the antimicrobial activity.

### Example 26

Encapsulated biocide from Examples 22-24 was added dropwise into secondary polymer solution under vigorous stirring. The secondary polymer can be PEG, PVA, PVP, PEI, PEO-PPO-PEO. The mixture was then ultrasonic-treated for 1 minute to form an inorganic-organic inner shell with an outermost organic shell.

### Example 27

Encapsulated biocide from Examples 11 and 12 was added dropwise into a mixed suspension/solution containing a polymer used in Examples 11 and 12 and an inorganic material (Examples 13-21) involved in Example 22, a mixed solution containing a polymer used in Examples 11 and 12 and a metal alkoxide involved in Example 23, and a polymeric organosilicon involved in Example 24 under vigorous stirring. The mixture was then ultrasonic-treated for 1 minute to form an innermost organic shell and an outmost inorganic-organic shell.

### Example 28

Encapsulated biocide from Examples 22-24 was added dropwise into a mixed suspension/solution containing a polymer used in Examples 11 and 12 and an inorganic material (Examples 13-21) in Example 22, a mixed solution containing a polymer used in Examples 11 and 12 and a metal alkoxide involved in Example 23, and a polymeric organosilicon involved in Example 24 under vigorous stirring. The mixture was then ultrasonic-treated for 1 minute to form an innermost inorganic-organic shell and an outermost inorganic-organic shell.

### Example 29

A material according to any of the above Examples was wiped/brushed uniformly onto porous materials and porous media, followed by drying in a fume hood. The brushing and drying processes were repeated for several times to reach the expected loading.

### Example 30

A material according to any of the above Examples was cast on porous materials and porous media, followed by drying in a fume hood. The volume of emulsion is ca. 600 ml for per square meter of porous materials and porous media.

### Example 31

Porous materials and porous media were first immersed into a material according to any of the above Examples for 30 seconds, followed by removal with a constant rate (typically 1 mm/s) and drying in a fume hood.

### Example 32

A material according to any of the above Examples was added on spinning porous materials and porous media to obtain antimicrobial coating. A typical spinning speed is 1000 rpm.

### Example 33

A material according to any of the above Examples was distributed uniformly on porous materials and porous media through a spray nozzle to obtain antimicrobial coating.

### Example 34

Porous materials and porous media with the instant antimicrobial coating prepared according to Examples 28-32 were cut into small pieces with the diameter of 15 mm. Then these pieces were placed into the flasks with the mixture of potassium iodide solution (2.5% (w/v), 40 ml) and sulphuric acid solution (50 wt%, 1 ml). The flasks were kept in the dark for 10 minutes, followed by titration with sodium thiosulphate solution (0.001 mol/1) until the color changed into light yellow. Starch solution (0.5% (w/v), 1 ml) was added in the flasks as an indicator. Titration was continued with sodium thiosulphate solution (0.001 mol/1) until the color changed from blue to colorless. The remaining ClO₂ amounts within porous materials and porous media with antimicrobial coating were calculated according to the volume of consumed sodium thiosulphate solution.

### Example 35

Separate bacterium/mold suspensions (0.1 ml) were inoculated on tryptone soya agar plates. Porous materials and porous media with antimicrobial coating were cut into pieces with a 15 mm diameter and placed on the center of inoculated plates. The plates were incubated at room temperature 96 hours (*Cladosporium*) or for 48 hours (*E. coli, MRSA* and S. *aureus*), respectively. The inhibition zone size was calculated from the radius of clear annulus without mold or bacterial colony.

### Example 36

Separate bacterium suspensions (0.1 ml) were spread evenly on glass slides, porous materials and porous media without/with antimicrobial coating for different time. Then the slides, porous materials and porous media were immersed in a culture tube containing neutralizer (20 ml) for 30 minutes to stabilize and wash off the still surviving bacteria from the surface. The neutralizer solutions collecting bacteria were inoculated on tryptone soya agar plates for viable culturing. The plates were incubated at 37°C for 24 hours. The viable bacteria were enumerated from formed colony number.

Separate virus suspensions (0.1 ml) were spread evenly on HEPA filters without/with antimicrobial coating for different time. Then the HEPA filters were immersed in a culture tube containing neutralizer (20 ml) for 30 minutes to stabilize and wash off the still surviving virus from the surface. The plaque assay (Madin-Darby canine kidney cell line for H1N1 and H3N2 influenza viruses, Buffalo green monkey epithelial cell line for Enterovirus 71) was performed to determine viable virus concentration.

## Claims

1. An antimicrobial coating material for surface coating comprising:
(a) biocides comprising at least one antimicrobial component selected from the group consisting of chlorine dioxide, hydrogen peroxide, peroxy acids, alcoholic compounds, phenolic compounds, essential oils, antimicrobial components of essential oils, antimicrobial phytochemicals, and combinations thereof; and
(b) inorganic-organic shells permeable to the biocides, comprising:
inorganic materials selected from the group consisting of metal oxides, which are selected from the group of titania sol, silica sol, and alumina sol, metal complexes, which are titanium peroxo complex sol, and combinations thereof; and
organic materials comprising a nonionic polymer,
wherein the inorganic materials are present in a concentration of 0.5-95 wt% of the inorganic-organic shells, and
wherein the inorganic-organic shells enclose and contain the biocides permitting storage and release.

2. The coating material according to claim 1, wherein the essential oil is selected from the group consisting of agarwood oil, cajuput oil, cananga oil, cinnamon bark oil, citronella oil, clove oil, eucalyptus oil, fennel oil, ginger oil, kaffir lime oil, nutmeg oil, olliumxanthorrhiza oil, origanum oil, patchouli oil, rosemary oil, sandalwood oil, tea tree oil, thyme oil, vetiver oil and combinations thereof.

3. The coating material according to claim 2, wherein the essential oil is diluted in a solvent selected from the group consisting of ethylene glycol, propylene glycol, glycerol, dipropylene glycol, polyethylene glycol, and combinations thereof.

4. The coating material according to claim 1, wherein the nonionic polymer is selected from the group consisting of polyethylene glycol, polyvinyl alcohol, polyvinylpyrrolidone, polyetherimide, and polyethyleneimine; or the nonionic polymer is selected from the group consisting ofpoly(ethylene oxide)-poly(propylene oxide)-poly(ethylene oxide), and poly(ethylene glycol)-poly(propylene glycol)-poly(ethylene glycol).

5. The coating material according to claim 1, further comprising at least one additional nonionic polymer, the at least one additional nonionic polymer being selected from the group consisting of polyethylene glycol, polyvinyl alcohol, polyvinylpyrrolidone, polyetherimide, polyethyleneimine, poly(ethylene oxide)-poly(propylene oxide)-poly(ethylene oxide), and poly(ethylene glycol)-poly(propylene glycol)-poly(ethylene glycol) and combinations thereof.

6. A method of producing antimicrobial coating material for application to porous materials or porous media, the method comprising the steps of:
(a) preparing a biocide mixture, wherein the biocide mixture comprises at least one antimicrobial component selected from the group consisting of chlorine dioxide, hydrogen peroxide, peroxy acids, alcoholic compounds, phenolic compounds, essential oils, antimicrobial components of essential oils, antimicrobial phytochemicals and combinations thereof;
(b) preparing a suspension/solution of nonionic polymers and inorganic materials, the inorganic material being selected from the group consisting of metal oxides, which are selected from the group of titania sol, silica sol, and alumina sol, metal complexes, which are titanium peroxo complex sol, and combinations thereof;
(c) preparing a stable sol suspension comprising the biocide mixture encapsulated within inorganic-organic shells, the inorganic-organic shells comprising the suspension/solution of the nonionic polymer and the inorganic material, wherein the inorganic material is present in a concentration of 0.5-95 wt% of the inorganic-organic shells; and
(d) applying the antimicrobial coating material on a porous material or in a porous medium to form an antimicrobial surface exhibiting a combination of release-killing, contact-killing and anti-adhesion properties against microorganisms.

7. The method according to claim 6, wherein during the preparation of the stable sol suspension, the inorganic material interacts with the organic material to form an inorganic-organic shell.

8. The method of claim 6, wherein the step of applying the antimicrobial coating further comprises at least one of wiping, brushing, casting, dip-coating, spin-coating and spraying the antimicrobial material onto a porous material or a porous medium.

9. The method according to claim 8, wherein the application is to a porous material and the porous material is selected from the group consisting of personal protective equipment, household products, clothes and infant products.

10. The method according to claim 8, wherein the application is to a porous medium, and the porous medium is selected from the group consisting of a porous membrane and a porous filter.

11. The method according to claim 10, wherein the porous medium is comprised of a material selected from the group consisting of metals, polymers, ceramics and combinations thereof.

## Patentansprüche

1. Antimikrobielles Beschichtungsmaterial zur Oberflächenbeschichtung, umfassend:
(a) Biozide, umfassend wenigstens einen antimikrobiellen Bestandteil ausgewählt aus der Gruppe bestehend aus Chlordioxid, Wasserstoffperoxid, Peroxysäuren, alkoholischen Bestandteilen, phenolischen Bestandteilen, essenziellen Ölen, antimikrobiellen Bestandteilen von essenziellen Ölen, antimikrobiellen Phytochemikalien, und Kombinationen davon; und
(b) anorganische Hüllen, die für die Biozide durchlässig sind, umfassend:
anorganische Materialien ausgewählt aus der Gruppe bestehend aus Metalloxiden, die aus der Gruppe von Titandioxid-Sol, Siliciumdioxid-Sol, und Aluminiumoxid-Sol, Metallkomplexen, die Titanperoxo-Komplex-Sol sind, und Kombinationen davon ausgewählt sind; und
organische Materialien umfassend ein nichtionisches Polymer,
wobei die anorganischen Materialien in einer Konzentration von 0,5 - 95 Gewichtsprozent der anorganisch-organischen Hüllen vorhanden sind, und
wobei die anorganisch-organischen Hüllen die Biozide einschließen und enthalten, wobei sie Lagerung und Freisetzung erlauben.

2. Beschichtungsmaterial nach Anspruch 1, wobei das essenzielle Öl aus der Gruppe ausgewählt ist, die aus Agarholzöl, Kajeputöl, Canangaöl, Zimtrindenöl, Zitronellaöl, Nelkenöl, Eukalyptusöl, Fenchelöl, Ingweröl, Kaffirlimettenöl, Macisöl, Olliumxanthorrhiza-Öl, Oreganoöl, Patschuliöl, Rosmarinöl, Sandelholzöl, Teebaumöl, Thymianöl, Vetiveröl und Kombinationen davon besteht.

3. Beschichtungsmaterial nach Anspruch 2, wobei das essenzielle Öl in einem Lösungsmittel verdünnt ist, das aus der Gruppe ausgewählt ist, die aus Ethylenglykol, Propylenglykol, Glycerol, Dipropylenglykol, Polyethylenglykol, und Kombinationen davon besteht.

4. Beschichtungsmaterial nach Anspruch 1, wobei das nichtionische Polymer aus der Gruppe ausgewählt ist, die aus Polyethylenglykol, Polyvinylalkohol, Polyvinylpyrrolidon, Polyetherimid, und Polyethylenimin besteht; oder das nichtionische Polymer aus der Gruppe ausgewählt ist, die aus Poly(ethylenoxid)-Poly(propylenoxid)-Poly(ethylenoxid), und Poly(ethylenglykol)-Poly(propylenglykol)-Poly(ethylenglykol) besteht.

5. Beschichtungsmaterial nach Anspruch 1, ferner umfassend wenigstens ein zusätzliches nichtionisches Polymer, wobei das wenigstens eine zusätzliche nichtionische Polymer aus der Gruppe ausgewählt ist, die aus Polyethylenglykol, Polyvinylalkohol, Polyvinylpyrrolidon, Polyetherimid, Polyethylenimin; Poly(ethylenoxid)-Poly(propylenoxid)-Poly(ethylenoxid), und Poly(ethylenglykol)-Poly(propylenglykol)-Poly(ethylenglykol) sowie Kombinationen davon besteht.

6. Verfahren zur Herstellung eines antimikrobiellen Beschichtungsmaterials zur Anwendung auf porösen Materialien oder porösen Medien, welches die folgenden Schritte umfasst:
(a) Herstellen eines Biozidgemisches, wobei das Biozidgemisch wenigstens einen antimikrobiellen Bestandteil ausgewählt aus der Gruppe bestehend aus Chlordioxid, Wasserstoffperoxid, Peroxysäuren, alkoholischen Bestandteilen, phenolischen Bestandteilen, essenziellen Ölen, antimikrobiellen Bestandteilen von essenziellen Ölen, antimikrobiellen Phytochemikalien, und Kombinationen davon umfasst;
(b) Herstellen einer Suspension/Lösung von nichtionischen Polymeren und anorganischen Materialien, wobei das anorganische Material aus der Gruppe ausgewählt ist, die aus Metalloxiden besteht, die aus der Gruppe von Titandioxid-Sol, Siliciumdioxid-Sol, und Aluminiumoxid-Sol, Metallkomplexen, die Titanperoxo-Komplex-Sol sind, und Kombinationen davon ausgewählt sind;
(c) Herstellen einer stabilen Solsuspension umfassend das Biozidgemisch eingekapselt in anorganisch-organische Hüllen, wobei die anorganisch-organischen Hüllen die Suspension/Lösung des nichtionischen Polymers und des anorganischen Materials umfassen, wobei das anorganische Material in einer Konzentration von 0,5 - 95 Gewichtsprozent der anorganisch-organischen Hüllen vorhanden ist; und
(d) Auftragen des antimikrobiellen Beschichtungsmaterials auf ein poröses Material oder in ein poröses Medium, um eine antimikrobielle Oberfläche zu bilden, die eine Kombination aus freisetzungshemmenden, kontakthemmenden und Antiadhäsionseigenschaften gegen Mikroorganismen aufweist.

7. Verfahren nach Anspruch 6, wobei während der Herstellung der stabilen Solsuspension das anorganische Material mit dem organischen Material unter Bildung einer anorganisch-organischen Hülle interagiert.

8. Verfahren nach Anspruch 6, wobei der Schritt des Auftragens der antimikrobiellen Beschichtung ferner wenigstens eines aus Wischen, Bürsten, Gießen, Tauchbeschichtung, Rotationsbeschichtung und Sprühen des antimikrobiellen Materials auf ein poröses Material oder ein poröses Medium umfasst.

9. Verfahren nach Anspruch 8, wobei die Auftragung auf ein poröses Material erfolgt und das poröse Material aus der Gruppe ausgewählt ist, die aus persönlicher Schutzausrüstung, Haushaltsprodukten, Kleidung und Säuglings- bzw. Kleinkindprodukten besteht.

10. Verfahren nach Anspruch 8, wobei die Auftragung auf ein poröses Medium erfolgt, und das poröse Medium aus der Gruppe ausgewählt ist, die aus einer porösen Membran und einem porösen Filter besteht.

11. Verfahren nach Anspruch 10, wobei das poröse Medium aus einem Material besteht, das aus der Gruppe ausgewählt ist, die aus Metallen, Polymeren, Keramiken und Kombinationen davon besteht.

## Revendications

1. Matériau de revêtement antimicrobien pour le revêtement de surfaces, comprenant :
(a) des biocides comprenant au moins un constituant antimicrobien sélectionné dans le groupe constitué du dioxyde de chlore, du peroxyde d'hydrogène, d'acides peroxydiques, de composés alcooliques, de composés phénoliques, d'huiles essentielles, de constituants antimicrobiens d'huiles essentielles, de phytochimiques antimicrobiens, et de combinaisons de ceux-ci ; et
(b) des enveloppes inorganiques-organiques perméables aux biocides, comprenant :
des matières inorganiques sélectionnées dans le groupe constitué d'oxydes métalliques, sélectionnés dans le groupe constitué d'un sol d'oxyde de titane, d'un sol de silice, et d'un sol d'alumine, et de complexes métalliques, sous la forme d'un sol qui est un complexe peroxo de titane, et de combinaisons de ceux-ci ; et
des matières organiques comprenant un polymère non ionique,
dans lequel les matières inorganiques sont présentes dans une concentration de 0,5 à 95 % en poids des enveloppes inorganiques-organiques, et
dans lequel les enveloppes inorganiques-organiques renferment et contiennent les biocides dont elles permettent le stockage et la libération.

2. Matériau de revêtement selon la revendication 1, dans lequel l'huile essentielle est sélectionnée dans le groupe constitué de l'huile de bois d'agar, de l'huile de cajeputier, de l'huile de cananga, de l'huile d'écorce de cannelle, de l'huile de citronnelle, de l'huile de clou de girofle, de l'huile d'eucalyptus, de l'huile de fenouil, de l'huile de gingembre, de l'huile de combava, de l'huile de muscade, de l'huile d'olliumxanthorrhiza, de l'huile d'origan, de l'huile de patchouli, de l'huile de romarin, de l'huile de santal, de l'huile d'arbre à thé, de l'huile de thym, de l'huile de vétiver, et de combinaisons de celles-ci.

3. Matériau de revêtement selon la revendication 2, dans lequel l'huile essentielle est diluée dans un solvant sélectionné dans le groupe constitué de l'éthylène glycol, du propylène glycol, du glycérol, du dipropylène glycol, du polyéthylène glycol, et de combinaisons de ceux-ci.

4. Matériau de revêtement selon la revendication 1, dans lequel le polymère non ionique est sélectionné dans le groupe constitué du polyéthylène glycol, de l'alcool polyvinylique, de la polyvinylpyrrolidone, du polyétherimide et de la polyéthylèneimine ; ou le polymère non ionique est sélectionné dans le groupe constitué du poly(oxyde d'éthylène)-poly(oxyde de propylène)-poly (oxyde d'éthylène), et du poly(éthylène glycol)-poly(propylène glycol)-poly(éthylène glycol).

5. Matériau de revêtement selon la revendication 1, comprenant en outre au moins un polymère non ionique additionnel, ledit au moins un polymère non ionique additionnel étant sélectionné dans le groupe constitué du polyéthylène glycol, de l'alcool polyvinylique, de la polyvinylpyrrolidone, du polyétherimide, de la polyéthylèneimine, du poly(oxyde d'éthylène)-poly(oxyde de propylène)-poly(oxyde d'éthylène), du poly(éthylène glycol)-poly(propylène glycol)-poly(éthylène glycol), et de combinaisons de ceux-ci.

6. Procédé de fabrication d'un matériau de revêtement antimicrobien destiné à une application sur des matériaux poreux ou des milieux poreux, le procédé comprenant les étapes qui consistent à :
(a) préparer un mélange biocide, le mélange biocide comprenant au moins un constituant antimicrobien sélectionné dans le groupe constitué du dioxyde de chlore, du peroxyde d'hydrogène, d'acides peroxydiques, de composés alcooliques, de composés phénoliques, d'huiles essentielles, de constituants antimicrobiens d'huiles essentielles, de phytochimiques antimicrobiens, et de combinaisons de ceux-ci ;
(b) préparer une suspension/solution de polymères non ioniques et de matières inorganiques, la matière inorganique étant sélectionnée dans le groupe constitué d'oxydes métalliques, sélectionnés dans le groupe constitué d'un sol d'oxyde de titane, d'un sol de silice, et d'un sol d'alumine, et de complexes métalliques, sous la forme d'un sol qui est un complexe peroxo de titane, et de combinaisons de ceux-ci ;
(c) préparer une suspension de sol stable comprenant le mélange biocide encapsulé dans des enveloppes inorganiques-organiques, les enveloppes inorganiques-organiques comprenant la suspension/solution du polymère non ionique et de la matière inorganique, la matière inorganique étant présente dans une concentration de 0,5 à 95 % en poids des enveloppes inorganiques-organiques ; et
(d) appliquer le matériau de revêtement antimicrobien sur un matériau poreux ou dans un milieu poreux pour former une surface antimicrobienne présentant une combinaison d'activité destructrice par libération, d'activité destructrice par contact, et de propriétés d'anti-adhérence contre des micro-organismes.

7. Procédé selon la revendication 6, dans lequel lors de la préparation de la suspension de sol stable, la matière inorganique interagit avec la matière organique pour former une enveloppe inorganique-organique.

8. Procédé selon la revendication 6, dans lequel l'étape d'application du revêtement antimicrobien comprend en outre au moins l'un d'une application avec un chiffon, d'une application au pinceau, d'un revêtement par coulée, d'un revêtement par trempage, d'un revêtement par centrifugation et d'une pulvérisation du matériau antimicrobien sur un matériau poreux ou un milieu poreux.

9. Procédé selon la revendication 8, dans lequel l'application est réalisée sur un matériau poreux et le matériau poreux est sélectionné dans le groupe constitué d'équipements de protection individuelle, de produits ménagers, de vêtements et de produits pour nourrissons.

10. Procédé selon la revendication 8, dans lequel l'application est réalisée sur un milieu poreux, et le milieu poreux est sélectionné dans le groupe constitué d'une membrane poreuse et d'un filtre poreux.

11. Procédé selon la revendication 10, dans lequel le milieu poreux se compose d'un matériau sélectionné dans le groupe constitué de métaux, de polymères, de céramiques et de combinaisons de ceux-ci.
